# EUROPÄISCHE PATENTSCHRIFT

(11) **EP 3 310 528 B1**
(45) Veröffentlichungstag und Bekanntmachung des Hinweises auf die Patenterteilung: **09.02.2022**
(21) Anmeldenummer: 16730435.1
(22) Anmeldetag: 22.06.2016
(51) Int. Cl.: B25J 9/00

(54) **WERKZEUGMASCHINE ZUR SPANENDEN BEARBEITUNG EINES WERKSTÜCKS**
MACHINE TOOL FOR MACHINING A WORKPIECE
MACHINE-OUTIL POUR L'USINAGE D'UNE PIÈCE PAR ENLÈVEMENT DE COPEAUX

(30) Priorität: 22.06.2015 DE 102015211496
(43) Veröffentlichungstag der Anmeldung: 25.04.2018
(73) Patentinhaber: DECKEL MAHO Pfronten GmbH, 87459 Pfronten (DE)
(72) Erfinder: KSCHIER, Uwe, 87629 Füssen (DE); GEISSLER, Alfred, 87459 Pfronten (DE)
(74) Vertreter: MERH-IP Matias Erny Reichl Hoffmann Patentanwälte PartG mbB
(86) Internationale Anmeldenummer: PCT/EP2016/064428
(87) Internationale Veröffentlichungsnummer: WO 2016/207223

(56) Entgegenhaltungen:
- EP-A1- 0 063 702
- EP-A1- 0 233 625
- EP-A2- 1 188 511
- WO-A1-86/06673
- WO-A1-2005/002786
- WO-A2-03/084721
- CN-A- 104 249 250
- DE-A1- 2 624 378
- DE-A1- 10 019 256
- DE-A1- 10 061 934
- DE-B3-102011 110 289
- FR-A1- 2 921 577
- US-A- 4 693 665

## Beschreibung

Die vorliegende Erfindung betrifft eine Werkzeugmaschine zur spanenden Bearbeitung eines Werkstücks, mit einem Spindelarm mit einer Spindel zur Aufnahme eines Werkzeugs oder des Werkstücks, wobei der Spindelarm zum Positionieren der Spindel in einem Bearbeitungsraum bewegbar an einem Spindelarmaufnahmeabschnitt angebracht ist, der an einem Maschinenständer angeordnet ist.

### HINTERGRUND DER ERFINDUNG

Im Stand der Technik sind Werkzeugmaschinen zur spanenden Bearbeitung von Werkstücken bekannt, die Verschwenkbewegungen der Spindel mit linearen Verfahrbewegungen der Spindel kombinieren.

EP 1 188 511 A2 beschreibt eine Werkzeugmaschine zur spanenden Bearbeitung von Werkstücken mit einem auf/an einem Maschinenständer motorisch verfahrbaren Werkzeugschlitten als Träger einer Bearbeitungseinheit mit mindestens einer Arbeitsspindel und einem Werkstückträger für die Aufnahme der zu bearbeitenden Werkstücke. Der Werkzeugschlitten enthält einen auf/an dem Maschinenständer verfahrbar geführten Querträger mit zwei in dessen Längsrichtung motorisch verschiebbaren Querschlitten, zwischen denen die Bearbeitungseinheit zur Axialbewegung der Arbeitsspindel über einen Koppelmechanismus mit mindestens zwei formsteifen Schwenkarmen gelenkig angeordnet ist.

Zum Abfahren von winkligen oder gekrümmten Oberflächen von Werkstücken sind diese Maschinen aufgrund der eingeschränkten Beweglichkeit der Spindel nicht geeignet.

Bei mehrgliedrigen, längsförmigen und daher torsionsanfälligen Schwenkarmen mit einer größeren Reichweite tritt das Problem auf, die für die Verschwenkbewegungen nötigen Drehmomente so zu übertragen, dass die Positioniergenauigkeit der Spindel nicht darunter leidet und gleichzeitig eine Konstruktion zu wählen, die die bei der spanenden Bearbeitung auftretenden Kräfte aufnehmen kann.

Aus der WO 2005/002786 A1 ist weiterhin eine Werkzeugmaschine nach dem Oberbegriff des Anspruchs 1 bekannt, bei der eine durch eine Plattform getragene Arbeitsspindel mittels vier sich paarweise gegenüberliegenden Armen, die an ihren Gelenken Antriebe aufweisen, über ein zu bearbeitendes Werkstück hinweg bewegt werden kann.

### ZUSAMMENFASSUNG DER ERFINDUNG

Eine Aufgabe der vorliegenden Erfindung ist es daher, eine Werkzeugmaschine zur spanenden Bearbeitung eines Werkstücks bereitzustellen, mit der die Drehmomente für die Rotationsbewegungen der einzelnen Spindelarmabschnitte so übertragen werden können, dass die Positionierung der Spindel am Ende des Spindelarms hochpräzise erfolgt. Des Weiteren ist es eine Aufgabe der vorliegenden Erfindung, eine Werkzeugmaschine bereitzustellen, mit der ein möglichst großer Teil der Werkstückoberfläche während einer kontinuierlichen Verfahrbewegung der Spindel spanend bearbeitet werden kann.

Diese Aufgaben werden gelöst durch eine Werkzeugmaschine nach Anspruch 1. Die abhängigen Ansprüche beziehen sich auf vorteilhafte Ausführungsbeispiele der erfindungsgemäßen Werkzeugmaschine.

Die erfindungsgemäße Werkzeugmaschine zur spanenden Bearbeitung eines Werkstücks weist auf: einen Spindelarm mit einer Spindel zur Aufnahme eines spanend bearbeitenden Werkzeugs oder des spanend zu bearbeitenden Werkstücks, wobei der Spindelarm zum Positionieren der Spindel in einem Bearbeitungsraum bewegbar an einem Spindelarmaufnahmeabschnitt angebracht ist, der an einem Maschinenständer angeordnet ist.

Dabei umfasst der Spindelarm zum Verschwenken der Spindel einen als Längselement ausgebildeten und gegenüber dem Spindelarmaufnahmeabschnitt um eine erste Rotationsachse drehbaren ersten Spindelarmabschnitt, der am Spindelarmaufnahmeabschnitt angelenkt ist, wobei sich die erste Rotationsachse in einem ersten Endabschnitt des Spindelarmaufnahmeabschnitts und in einem ersten Endabschnitt des ersten Spindelarmabschnitts befindet; und einen als Längselement ausgebildeten und gegenüber dem ersten Spindelarmabschnitt um eine zweite Rotationsachse drehbaren zweiten Spindelarmabschnitt, der am ersten Spindelarmabschnitt angelenkt ist, wobei sich die zweite Rotationsachse in einem zweiten Endabschnitt des ersten Spindelarmabschnitts und in einem ersten Endabschnitt des zweiten Spindelarmabschnitts befindet.

Der Spindelarmaufnahmeabschnitt umfasst einen ersten Unterabschnitt und einen zweiten Unterabschnitt, die zur Aufnahme des Spindelarms voneinander beabstandet an dem Maschinenständer angeordnet sind, wobei der erste Unterabschnitt des Spindelarmaufnahmeabschnitts einen ersten verspannten Antrieb zur Übertragung eines ersten Drehmoments auf den ersten Spindelarmabschnitt für eine Rotationsbewegung des ersten Spindelarmabschnitts um die erste Rotationsachse aufweist.

Der erste Spindelarmabschnitt umfasst einen ersten Unterabschnitt und einen zweiten Unterabschnitt, die zur Aufnahme des zweiten Spindelarmabschnitts voneinander beabstandet an dem Spindelarmaufnahmeabschnitt angeordnet sind, wobei der erste Unterabschnitt des ersten Spindelarmabschnitts einen zweiten verspannten Antrieb zur Übertragung eines zweiten Drehmoments auf den zweiten Spindelarmabschnitt für eine Rotationsbewegung des zweiten Spindelarmabschnitts um die zweite Rotationsachse aufweist, wobei die Werkzeugmaschine ferner einen um eine Drehtischrotationachse rotierbaren Drehtisch zur Aufnahme des spanend bearbeitenden Werkzeugs oder des spanend zu bearbeitenden Werkstücks aufweist, wobei der Drehtisch parallel zur ersten Rotationsachse oder parallel zur zweiten Rotationsachse relativ zur Spindel verfahrbar ist.

Somit kann der Spindelarm als Ganzes verschwenkt werden; gleichzeitig kann aber auch jeder seiner Abschnitte einzeln verschwenkt werden. Durch die Ausbildung des ersten und zweiten Spindelarmabschnitts als Längselemente wird eine Einklapp- oder Ausklappbewegung des Spindelarms bei gleichzeitiger Verschwenkung des Spindelarms ermöglicht. Auf diese Weise kann ein großer Bereich des Bearbeitungsraums mittels einer geringen Anzahl an Einzelverfahrbewegungen erreicht werden, so dass die Spindel schnell zu ihrer endgültigen Ausrichtungsposition gefahren werden kann.

Durch das Anbringen der einzelnen Spindelarmabschnitte zwischen zwei Unterabschnitten des jeweils vorgelagerten Spindelarmabschnitts bzw. das Anbringen des ersten Spindelarmabschnitts zwischen zwei Unterabschnitten des Spindelarmaufnahmeabschnitts wird eine hohe Stabilität in der Aufhängung und eine hohe Torsionssteifigkeit des langen Spindelarms erreicht.

Durch das Anbringen der Antriebe für die Rotation des ersten und des zweiten Spindelarmabschnitts direkt am jeweiligen Gelenk kann das benötigte Drehmoment bedarfsgenau auf den jeweiligen nachgelagerten Spindelarmabschnitt übertragen werden. Damit kann die Spindel am einen Ende des Spindelarms genau positioniert werden, obwohl ihre Bewegung auch aus der Rotationsbewegung des ersten Spindelarmabschnitts resultiert, die am anderen Ende des Spindelarmabschnitts und damit verhältnismäßig weit entfernt von der Spindel stattfindet. Die Anzahl der Antriebe an einem Gelenk ist nicht auf 1 beschränkt, sondern hängt davon ab, wieviel Kraft am jeweiligen Gelenk übertragen werden soll, also beispielsweise auch vom Gewicht der Spindelarmabschnitte und von der Art der spanenden Bearbeitung bzw. vom zu bearbeitenden Werkstoff. Auch an den jeweiligen zweiten Unterabschnitten des Spindelarmaufnahmeabschnitts und der Spindelarmabschnitte kann jeweils ein Antrieb angebracht sein. Es ist ebenso möglich, an einigen, aber nicht an allen zweiten Unterabschnitten des Spindelarmaufnahmeabschnitts und der Spindelarmabschnitte einen Antrieb anzubringen.

Die Verspannung der Antriebe reduziert das Umkehrspiel im Getriebe und trägt so zur genauen Positionierung der Spindel bei.

Üblicherweise ist das zu bearbeitende Werkstück auf dem Drehtisch befestigt und das Bearbeitungswerkzeug in der Spindel aufgenommen. Es ist jedoch auch möglich, ein Werkstück an der Spindel und ein Werkzeug auf dem Drehtisch zu befestigen. Die oben beschriebenen Beweglichkeiten des Spindelarms dienen dazu, die Spindel an den Drehtisch heranzufahren, bis der erforderliche Abstand erreicht ist, um die Werkstückoberfläche bearbeiten zu können, und dazu, das Werkstück in der Höhe abzufahren. Auch die Bearbeitung der nach oben weisenden Oberfläche des Werkstücks ist durch Bewegungen des Spindelarms möglich. Um jedoch auch die vom Spindelarm abgewandte Seite des Werkstücks bearbeiten zu können, ist ein Drehtisch erforderlich, mit dem dem Spindelarm nach Bedarf eine andere Seite des Werkstücks zugewandt werden kann.

Vorzugsweise ist bei der erfindungsgemäßen Werkzeugmaschine ein Abstand zwischen den zwei Unterabschnitten des Spindelarmaufnahmeabschnitts größer als ein Abstand zwischen den zwei Unterabschnitten des ersten Spindelarmabschnitts, indem der erste Endabschnitt des ersten Spindelarmabschnitts zwischen den zwei Unterabschnitten des Spindelarmaufnahmeabschnitts angeordnet ist.

Die Abmessungen der Spindelarmabschnitte in der Breite werden also stufenweise kleiner. Durch eine solche Anordnung ist es möglich, sehr kleine Winkel zwischen dem ersten und zweiten Spindelarmschnitt zu bilden, also den Spindelarm fast vollständig zusammenzuklappen, so dass der erste und der zweite Spindelarm fast parallel orientiert sind. Dadurch können auch Spindelpositionen nahe des ersten Spindelarmabschnitts erreicht werden. Somit wird der Schwenkbereich für die Spindel insgesamt vergrößert.

Ferner könnten der erste verspannte Antrieb und der zweite verspannte Antrieb jeweils vier mechanisch verspannte Antriebselemente und jeweils ein Abtriebselement aufweisen.

Dies hätte den Vorteil, dass mit einem großen Abtriebselement ein großvolumiger Antrieb zum Übertragen des benötigten Drehmoments realisiert werden kann, dieser aber dennoch sehr genau arbeitet, da jeweils je zwei der vier Antriebselemente mechanisch verspannt werden können und so das Umkehrspiel fast vollständig eliminiert wird.

Ferner könnten die vier Antriebselemente des ersten verspannten Antriebs am Spindelarmaufnahmeabschnitt entlang eines Kreisbogens mit einem Mittelpunktswinkel von maximal 180° angeordnet sein; und die vier Antriebselemente des zweiten verspannten Antriebs am ersten Spindelarmabschnitt gleichmäßig entlang eines Kreises angeordnet sein.

Die unterschiedliche Anordnung bezüglich des Spindelarmaufnahmeabschnitts und des ersten Spindelarmabschnitts hat ihren Grund in der unterschiedlichen Größe der Abtriebselemente am Gelenk der ersten Rotationsachse und am Gelenk der zweiten Rotationsachse. Während das Abtriebselement an der zweiten Rotationsachse klein genug ist, um die Antriebselemente gleichmäßig um das Abtriebselement verteilen zu können, ohne den verfügbaren Schwenkbereich einzuschränken, ist dies für das große Abtriebselement an der ersten Rotationsachse nicht mehr möglich.

Vorzugsweise weist die Werkzeugmaschine weiter einen gegenüber dem zweiten Spindelarmabschnitt um eine dritte Rotationsachse drehbaren dritten Spindelarmabschnitt zur Aufnahme der Spindel auf, der am zweiten Spindelarmabschnitt angelenkt ist, wobei sich die dritte Rotationsachse in einem zweiten Endabschnitt des zweiten Spindelarmabschnitts befindet, und der zweite Spindelarmabschnitt einen dritten Antrieb zur Übertragung eines dritten Drehmoments auf den dritten Spindelarmabschnitt für eine Rotationsbewegung des dritten Spindelarmabschnitts um die dritte Rotationsachse aufweist.

Der dritte Freiheitsgrad in Form der dritten Rotationsachse ermöglicht neben der Positionierung der Spindel im Bearbeitungsraum auch eine Ausrichtung der Spindel, so dass z.B. mit einem in der Spindel aufgenommenen Werkzeug die Oberflächenkontur eines Werkstücks abgefahren und bearbeitet werden kann. Dabei ist die erfindungsgemäße Werkzeugachse nicht auf drei Spindelarmrotationsachsen beschränkt, sondern der Spindelarm kann auch mehr als drei (z.B. vier) einzeln bewegliche Abschnitte aufweisen.

Vorzugsweise sind die erste Rotationsachse, die zweite Rotationsachse und die dritte Rotationsachse parallel zueinander orientiert; und vorzugsweise weist die Werkzeugmaschine weiter eine numerische Steuerung auf, die dazu ausgelegt ist, den ersten verspannten Antrieb am Spindelarmaufnahmeabschnitt, den zweiten verspannten Antrieb am ersten Spindelarmabschnitt und den dritten Antrieb am zweiten Spindelarmabschnitt so zu steuern, dass durch gleichzeitige Rotationsbewegungen des ersten Spindelarmabschnitts um die erste Rotationsachse, des zweiten Spindelarmabschnitts um die zweite Rotationsachse und des dritten Spindelarmabschnitts um die dritte Rotationsachse ein Endabschnitt der Spindel am dritten Spindelarmabschnitt eine rechtwinklige Bahn in einer Ebene senkrecht zu den parallelen Rotationsachsen ausführt.

Das heißt, dass bei einem vor dem Spindelarm positionierten, beispielsweise quaderförmigen Werkstück die dem Spindelarm zugewandte Oberfläche und die nach oben weisende Oberfläche des Werkstücks in einer kontinuierlichen Bewegung der Spindel durch gleichzeitige Rotationsbewegungen der Spindelarmabschnitte um die jeweiligen Rotationsachsen abgefahren werden können. Eine entsprechende kontinuierliche Abfahrbewegung der Spindel ist auch bei abgerundeten Kanten des Werkstücks oder bei kugelförmigen Werkstücken möglich. Wird das Werkstück zusätzlich gedreht, ist somit eine Rundum-Bearbeitungsbewegung der Spindel möglich.

Vorzugsweise sind die am Spindelarmaufnahmeabschnitt und am ersten Spindelarmabschnitt angeordneten verspannten Antriebe als Zykloidgetriebe ausgebildet; und ist der am zweiten Spindelarmabschnitt angeordnete dritte Antrieb als gekühlter Torqueantrieb ausgebildet.

Zykloidgetriebe haben den Vorteil, dass sie besonders verschleißarm und langlebig sind und hinsichtlich des langen Spindelarms und der spanenden Bearbeitung ausreichend hohe Kräfte übertragen können. Ein Torqueantrieb hat den Vorteil, dass er große Beschleunigungen und eine hohe Dynamik des Systems ermöglicht und aufgrund des Fehlens mechanischer Elemente wartungsarm ist. Die Kühlung dient zur Kompensation der vermehrten Wärmeentwicklung beim Torqueantrieb.

Vorzugsweise umfasst der Spindelarm ein Führungselement zur Leitungsführung an einer Position, an der der zweite Spindelarmabschnitt am ersten Spindelarmabschnitt angelenkt ist, wobei das Führungselement mehrere Segmente zur getrennten Führung mehrerer Leitungen aufweist.

Für die Energieversorgung der Antriebe am Spindelarm und für die Kühlmittelversorgung des gekühlten Torqueantriebs müssen Versorgungsleitungen wie Stromkabel oder flüssigkeitsführende Schläuche zu verschiedenen Positionen am Spindelarm bzw. bis zur Spindel geführt werden. Diese werden vorzugsweise innerhalb des Spindelarms geführt. Um bei einer Schwenkbewegung des zweiten Spindelarmabschnitts Biegungsbelastungen der Leitungen am Gelenk der zweiten Rotationsachse zu vermeiden, befindet sich an diesem Gelenk ein Führungselement, wobei die verschiedenen Versorgungsleitungen durch verschiedene Segmente des Führungselements geführt werden. Die Versorgungsleitungen sind dabei nicht im oder am Gelenk fixiert, sondern sind schwimmend durch das Führungselement geführt. Der Spindelarm kann mehrere Führungselemente aufweisen, so dass mehrere Gelenke oder jedes Gelenk des Spindelarms ein entsprechendes Führungselement aufweisen.

Vorzugsweise ist die Drehtischrotationsachse der erfindungsgemäßen Werkzeugmaschine in einem Winkel zwischen 0 Grad und 90 Grad zur ersten Linearachse orientiert.

Um das Werkstück zusätzlich zu einer Bearbeitung in der Höhe und in der Länge auch in der Breite bearbeiten zu können, muss dessen Position bei gleichbleibendem Abstand zum Spindelarmaufnahmeabschnitt relativ zur Spindel seitlich verschiebbar sein. Dies wird beispielsweise durch einen verschiebbaren Drehtisch realisiert. Somit ist die gesamte Oberfläche des Werkstücks mit Ausnahme der Befestigungsfläche des Werkstücks auf dem Tisch mit dem Spindelkopf erreichbar. Zusätzlich kann der Drehtisch auch verschwenkbar (also um eine weitere Achse neben der Drehtischrotationsachse drehbar) sein, so dass beispielsweise das Werkstück dem Spindelarm zugeneigt werden kann. Aufgrund der großen Reichweite des Spindelarms (bei fast gestrecktem ersten und zweiten Spindelarmabschnitt) und der Möglichkeit, den dritten Spindelarmabschnitt nahe an den Spindelarmaufnahmeabschnitt heranzubringen, können sowohl kleine als auch große Werkstücke rundumbearbeitet werden.

Vorzugsweise weist die erfindungsgemäße Werkzeugmaschine weiterhin eine zweite Linearachse zur Aufnahme des Spindelarmaufnahmeabschnitts auf, wobei die zweite Linearachse parallel zur ersten Rotationsachse orientiert ist und der Spindelarmaufnahmeabschnitt entlang der zweiten Linearachse am Maschinenständer bewegbar angeordnet ist.

Vor allem bei langen Werkstücken kann es vorteilhaft sein, anstatt des Drehtisches den Spindelarm oder sowohl den Drehtisch als auch den Spindelarm verschieben zu können.

Ferner könnte der erste Spindelarmabschnitt einen Pufferabschnitt zum Stoppen einer Rotationsbewegung des zweiten Spindelarmabschnitts in eine Richtung auf den ersten Spindelarmabschnitt zu aufweisen.

Dies hätte den Vorteil, dass Beschädigungen am ersten und am zweiten Spindelarmabschnitt vor allem bei schnellen oder unkontrollierten Bewegungen des Spindelarms vermieden werden.

Vorzugsweise weist der Maschinenständer eine Aufnahmefläche zur Aufnahme des Spindelarmaufnahmeabschnitts auf und ist durch eine Richtung von einer Deckenfläche eines Aufstellraumes für die Werkzeugmaschine zu einer Standfläche der Werkzeugmaschine eine Oben-Unten-Richtung definiert und ist der Spindelarmaufnahmeabschnitt an der Aufnahmefläche entweder oberhalb der Aufnahmefläche oder unterhalb der Aufnahmefläche oder seitlich der Aufnahmefläche angeordnet.

Dies hat den Vorteil, dass der Schwenkarm je nach Bedarf oder angepasst an die Platzverhältnisse entweder auf dem Maschinenständer stehend oder von oben oder seitlich hängend montiert werden kann.

### KURZBESCHREIBUNG DER FIGUREN

- **Fig. 1**: zeigt ein Ausführungsbeispiel einer erfindungsgemäßen Werkzeugmaschine von schräg vorne.
- **Fig. 2A**: zeigt ein Ausführungsbeispiel einer erfindungsgemäßen Werkzeugmaschine von schräg vorne in Schnittansicht.
- Fig. 2B: zeigt ein Ausführungsbeispiel eines Führungselements einer erfindungsgemäßen Werkzeugmaschine.
- Fig. 3A: zeigt ein Ausführungsbeispiel einer erfindungsgemäßen Werkzeugmaschine von der Seite.
- Fig. 3B: zeigt ein Ausführungsbeispiel einer erfindungsgemäßen Werkzeugmaschine von der Seite in Schnittansicht.
- Fig. 4: zeigt ein Ausführungsbeispiel einer erfindungsgemäßen Werkzeugmaschine von der anderen Seite.
- Fig. 5: zeigt ein Ausführungsbeispiel einer erfindungsgemäßen Werkzeugmaschine von schräg hinten.
- Fig. 6: zeigt ein Ausführungsbeispiel einer erfindungsgemäßen Werkzeugmaschine von vorne.
- Fig. 7: zeigt ein Ausführungsbeispiel einer erfindungsgemäßen Werkzeugmaschine von hinten.
- Fig. 8A: zeigt ein Ausführungsbeispiel einer erfindungsgemäßen Werkzeugmaschine in einer Position einer Positionierbewegung der Spindel für ein langes Werkzeug.
- Fig. 8B: zeigt ein Ausführungsbeispiel einer erfindungsgemäßen Werkzeugmaschine in einer weiteren Position einer Positionierbewegung der Spindel.
- Fig. 8C: zeigt ein Ausführungsbeispiel einer erfindungsgemäßen Werkzeugmaschine in einer weiteren Position einer Positionierbewegung der Spindel.
- Fig. 8D: zeigt ein Ausführungsbeispiel einer erfindungsgemäßen Werkzeugmaschine in einer weiteren Position einer Positionierbewegung der Spindel.
- Fig. 8E: zeigt ein Ausführungsbeispiel einer erfindungsgemäßen Werkzeugmaschine in einer weiteren Position einer Positionierbewegung der Spindel.
- Fig. 9A: zeigt ein Ausführungsbeispiel einer erfindungsgemäßen Werkzeugmaschine in einer Position einer Positionierbewegung der Spindel für ein kurzes Werkzeug.
- Fig. 9B: zeigt ein Ausführungsbeispiel einer erfindungsgemäßen Werkzeugmaschine in einer weiteren Position einer Positionierbewegung der Spindel.
- Fig. 9C: zeigt ein Ausführungsbeispiel einer erfindungsgemäßen Werkzeugmaschine in einer weiteren Position einer Positionierbewegung der Spindel.
- Fig. 10: zeigt ein weiteres Ausführungsbeispiel einer erfindungsgemäßen Werkzeugmaschine.
- Fig. 11: zeigt ein weiteres Ausführungsbeispiel einer erfindungsgemäßen Werkzeugmaschine aus einer weiteren Perspektive.

### DETAILLIERTE BESCHREIBUNG DER FIGUREN UND BEVORZUGTER AUSFÜHRUNGSBEISPIELE DER VORLIEGENDEN ERFINDUNG

Im Folgenden wird die vorliegende Erfindung detailliert anhand von Ausführungsbeispielen und der beispielhaften Figuren beschrieben und erläutert.

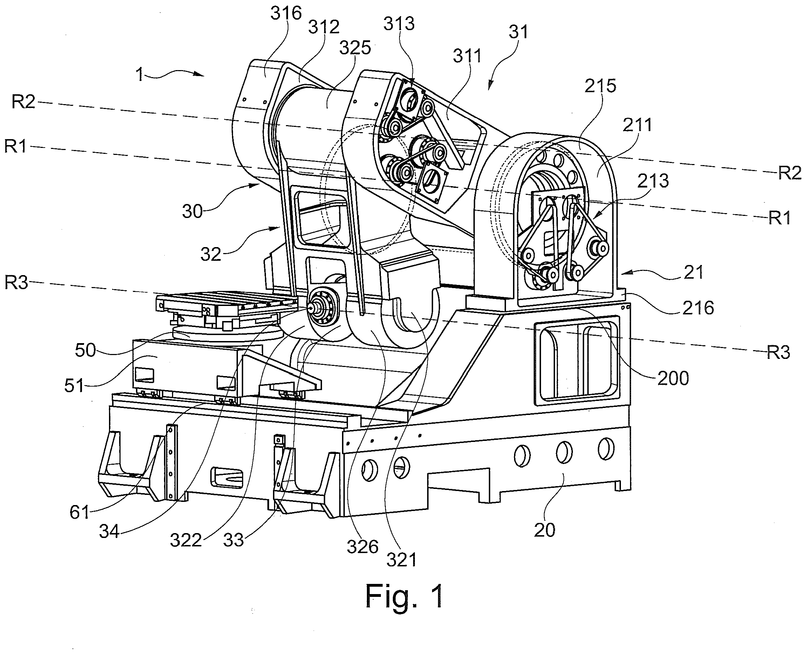

Fig. 1 zeigt ein Ausführungsbeispiel der erfindungsgemäßen Werkzeugmaschine 1 aus einer Perspektive von schräg vorne. Auf einer Aufnahmefläche 200 des Maschinenständers 20 ist der zweiteilige Spindelarmaufnahmeabschnitt 21 mit einem ersten Unterabschnitt 211 und einem zweiten Unterabschnitt 212 angebracht, wobei in Fig. 1 nur der erste Unterabschnitt 211 zu sehen ist und der zweite Unterabschnitt 212 vom Spindelarm 30 verdeckt ist.

Der Spindelarm 30 ist dreiteilig aufgebaut und besteht aus einem ersten Spindelarmabschnitt 31, einem zweiten Spindelarmabschnitt 32 und einem dritten Spindelarmabschnitt 33. Der erste Spindelarmabschnitt 31 ist längsförmig mit einem ersten Endabschnitt 315, der zwischen den Unterabschnitten 211, 212 des Spindelarmaufnahmeabschnitts 21 angeordnet ist, und einem zweiten Endabschnitt 316, der zweiteilig aus einem ersten Unterabschnitt 311 und einem zweiten Unterabschnitt 312 aufgebaut ist. Der zweite Spindelarmabschnitt 32 ist ebenfalls längsförmig mit einem ersten Endabschnitt 325, der zwischen den Unterabschnitten 311, 312 des ersten Spindelarmabschnitts 31 angeordnet ist, und einem zweiten Endabschnitt 326, der in dieser Ausführungsform zweiteilig aus einem ersten Unterabschnitt 321 und einem zweiten Unterabschnitt 322 aufgebaut ist. Der dritte Spindelarmabschnitt 33 ist zwischen den Unterabschnitten 321, 322 des zweiten Spindelarmabschnitts 32 angeordnet und trägt die Spindel 34. Somit ist jeder Abschnitt des Spindelarms 30 an genau einem anderen Abschnitt des Spindelarms 30 montiert, wobei sich die Gabelform der zwei beabstandeten Unterabschnitte an einem Ende der Längselemente ausgehend vom Spindelarmaufnahmeabschnitt 21 über den gesamten Spindelarm 30 (erster, zweiter und dritter Spindelarmabschnitt 31, 32, 33) bis hin zu dem Ende des Spindelarms 30 zieht, an dem die Spindel 34 aufgenommen ist. Dabei sind die Unterabschnitte 211, 212 des Spindelarmaufnahmeabschnitts 21 nicht miteinander verbunden, wohingegen die Unterabschnitte 311, 312 des ersten Spindelarmabschnitts 31 und die Unterabschnitte 321, 322 des zweiten Spindelarmabschnitts 32 in einer Richtung auf die Mitte des jeweiligen längsförmigen Spindelarmabschnitts hinzu verbunden sind.

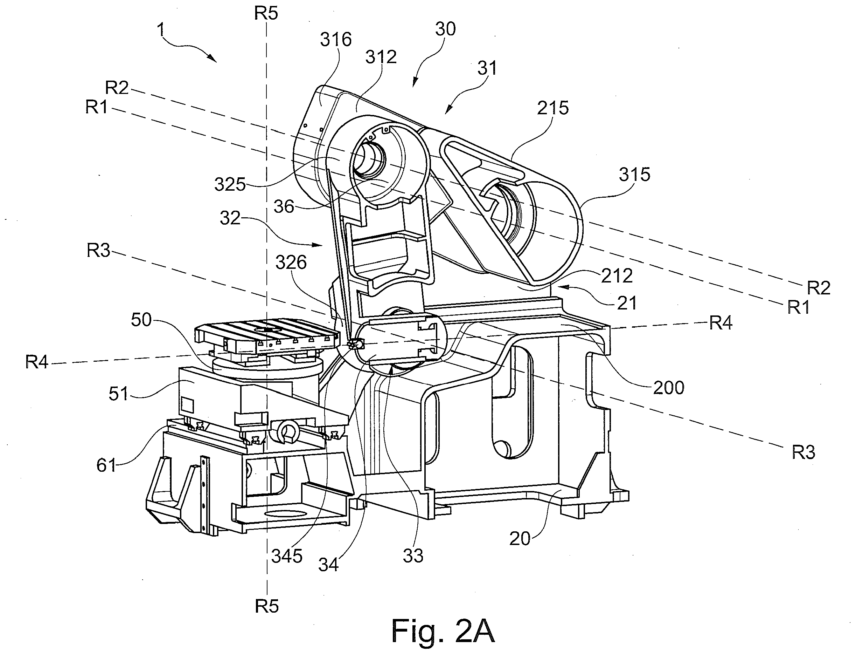

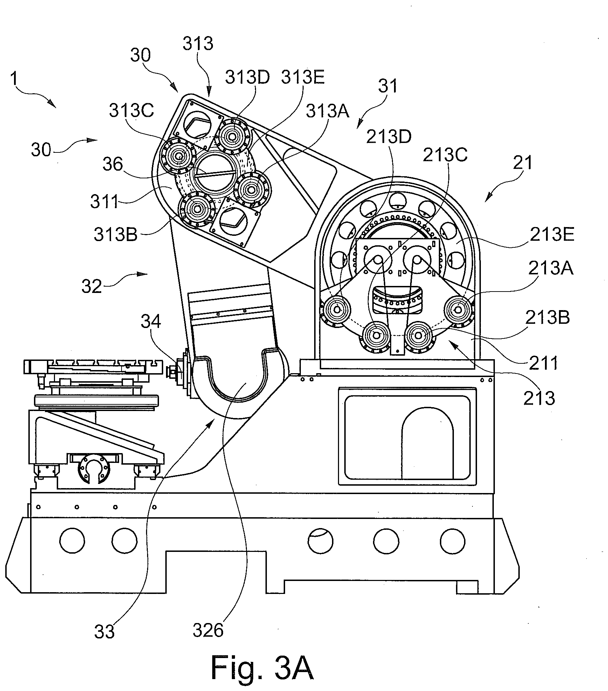

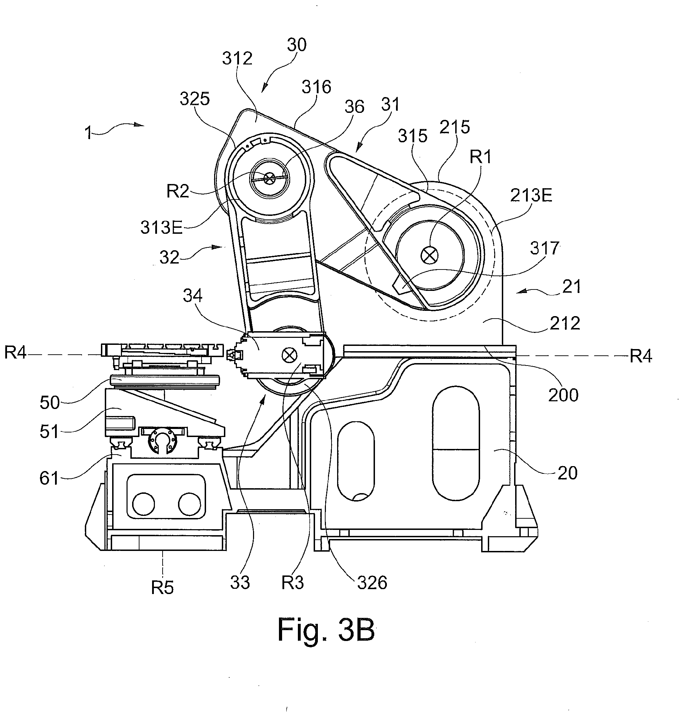

Aufgrund der dreigliedrigen Form des Spindelarms 30 können alle drei Abschnitte 31, 32, 33 des Spindelarms 30 separat verschwenkt werden, wobei die Spindel 34 die Summe der Verschwenkbewegungen der Spindelarmabschnitte 31, 32, 33 ausführt. Im Einzelnen ist dazu der erste Endabschnitt 315 des ersten Spindelarmabschnitts 31 an einem ersten Endabschnitt 215 des Spindelarmaufnahmeabschnitts 21 angelenkt (der zweite Endabschnitt 216 des Spindelarmaufnahmeabschnitts 21 ist auf der Aufnahmefläche 200 des Maschinenständers 20 montiert), so dass der erste Spindelarmabschnitt 31 (und somit der gesamte Spindelarm 30) um eine erste Rotationsachse R1 drehbar ist. Die Anordnung der Getriebe zur Übertragung der Rotationsbewegung auf den ersten Spindelarmabschnitt 31 wird anhand von Fig. 3 genauer beschrieben. In ähnlicher Weise ist der erste Endabschnitt 325 des zweiten Spindelarmabschnitts 32 an dem zweiten Endabschnitt 316 des ersten Spindelarmabschnitts 31 angelenkt, so dass der zweite Spindelarmabschnitt 32 (mitsamt dem dritten Spindelarmabschnitt 33 und der Spindel 34) um eine zweite Rotationsachse R2 drehbar ist. Der dritte Spindelarmabschnitt 33 ist um eine dritte Rotationsachse R3 rotierbar am zweiten Endabschnitt 326 des zweiten Spindelarmabschnitts 32 angebracht und dient zur Aufnahme der Spindel 34, die in Längsrichtung der Spindel um die Spindelrotationsachse R4 (siehe Fig. 2A) rotierbar ist. Somit sind alle drei Gelenke des Spindelarms als Scharniergelenke ausgebildet, wobei die drei Rotationsachsen R1, R2, R3 parallel zueinander und parallel zu einer Standfläche der Werkzeugmaschine 1 orientiert sind.

Daneben weist der Maschinenständer 20 der erfindungsgemäßen Werkzeugmaschine 1 zwei Führungsschienen einer ersten Linearachse 61 auf, auf denen einen Schlitten 51 parallel zu den Rotationsachsen R1, R2, R3 verfahrbar ist. Auf dem Schlitten 51 ist ein Drehtisch 50 montiert, der um eine Drehtischrotationsachse R5 (siehe Fig. 2A) rotierbar ist, die senkrecht auf der Standfläche der Werkzeugmaschine 1 steht. Der Drehtisch 50 kann auch zusätzlich auf dem Schlitten 51 verschwenkbar ausgebildet sein.

Fig. 2A zeigt einen Schnitt durch die erfindungsgemäße Werkzeugmaschine 1 entlang einer Längsrichtung des Spindelarms 30. Gut sichtbar sind zum Einen die Verstrebungen des ersten Spindelarmabschnitts 31 und des zweiten Spindelarmabschnitts 32 in der Breite sowie die Anordnung der Spindel 34 am zweiten Endabschnitt 326 des zweiten Spindelarmabschnitts 32 und zum Anderen die Lage der parallelen Rotationsachsen R1, R2, R3 der Spindelarmabschnitte 31, 32, 33, der Spindelrotationsachse R4 und der Drehtischrotationachse R5.

Die Lage der ersten Rotationsachse R1 im Raum ist fix. Die Richtungen der zweiten und dritten Rotationsachse R2 und R3 sind ebenfalls unveränderlich, nämlich parallel zur ersten Rotationsachse R1, allerdings hängt deren Höhe über dem Boden von der Orientierung des ersten Spindelarmabschnitts 31 (für R2) bzw. von der Orientierung des ersten und zweiten Spindelarmabschnitts 31 und 32 (für R3) ab. Die Orientierung der Spindelrotationsachse R4 entspricht der Ausrichtung der Spindel 34 und hängt von der Orientierung aller drei Spindelarmabschnitte 31, 32, 33 ab. Die Orientierung der Drehtischrotationsachse R5 ist unabhängig vom Spindelarm 30 und steht bei nicht verschwenkbarem Drehtisch 50 senkrecht auf die Bodenfläche.

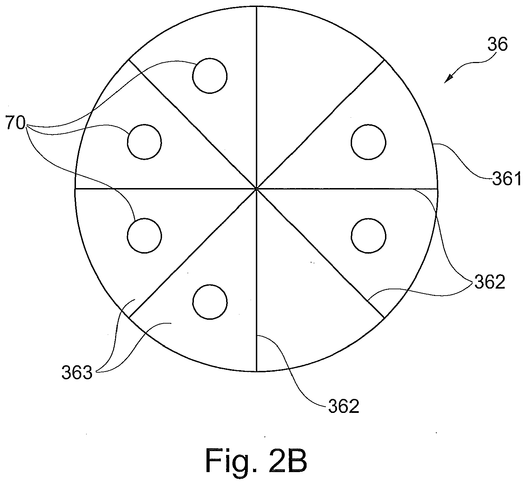

Am Gelenk der zweiten Rotationsachse R2 ist ein Führungselement 36 gezeigt, durch das Leitungen 70 (Versorgungsleitungen für Kühlflüssigkeit und Stromkabel) geführt werden. Eine beispielhafte Form des Führungselements 36 ist in Fig. 2B dargestellt. Das Führungselement 36 ist kreisförmig mit einem kreisförmigen Mantel 361 und Stegen 362, die das Führungselement 36 in mehrere Segmente 363 aufteilen. Die Leitungen 70 werden einzeln durch die Segmente 363 geführt, wobei die Leitungen 70 nicht am Führungselement 36 befestigt sind, um Biegebelastungen bei einer Rotation des zweiten Spindelarmabschnitts 32 um die zweite Rotationsachse R2 zu vermeiden.

Das Führungselement 36 ist drehfest mit dem zweiten Spindelarmabschnitt 32 verbunden, so dass es sich bei einer Verschwenkbewegung des zweiten Spindelarmabschnitts 32 entsprechend mitdreht. Somit können die Leitungen 70, die bis zum zweiten Endabschnitt 326 des zweiten Spindelarmabschnitts 32 geführt werden, in einer Längsrichtung des zweiten Spindelarmabschnitts 32 in einem geraden Verlauf innerhalb des zweiten Spindelabschnitts 32 geführt werden.

Auch das Gelenk an der ersten Rotationsachse R1 und das Gelenk an der dritten Rotationsachse R3 können entsprechende Führungselemente 36 aufweisen.

Fig. 3A zeigt ein Ausführungsbeispiel der erfindungsgemäßen Werkzeugmaschine 1 von der Seite. In dieser Ansicht sind die drei Rotationsachsen R1, R2, R3 senkrecht zur Papierebene orientiert. Zur Übertragung einer Drehbewegung auf den ersten Spindelarmabschnitt 31 weist der erste Unterabschnitt 211 des Spindelarmaufnahmeabschnitts 21 einen ersten verspannten Antrieb 213 auf, der aus vier kreisförmigen Antriebselementen 213A - 213D und einem kreisförmigen Abtriebselement 213E mit größerem, z.B. sechsfachem Radius im Vergleich zum Radius der Antriebselemente 213A - 213D besteht. Die Antriebselemente 213A - 213D sind umfänglich am Abtriebselement 213E angeordnet und übertragen gemeinsam ein Drehmoment auf das Abtriebselement 213E. Die Verspannung der Antriebselemente 213A - 213D zur Eliminierung des Umkehrspiels und damit zur genaueren Positionierung der Spindel 34 kann beispielsweise dadurch realisiert sein, dass je zwei der vier Antriebselemente 213A - 213D mittels eines Riemens mechanisch verspannt sind, wobei die Riemen jeweils um die zwei Antriebselemente 213A, 213B bzw. 213C, 213D und um einen dritten Fixpunkt in der Kreisfläche des Abtriebselements 213E laufen und so zwei Dreiecke bilden. Die Antriebselemente 213A - 213D am Spindelarmaufnahmeabschnitt 21 sind nicht gleichmäßig über dem Umfang des Abtriebselements 213E verteilt, sondern nur auf der unteren Kreisbogenhälfte des Abtriebselements 213E, um den Verschwenkbereich des ersten Spindelarmabschnitts 31 nicht einzuschränken. Der erste verspannte Antrieb 213 am Spindelarmaufnahmeabschnitt 21 kann als Zykloidgetriebe ausgebildet sein, das sich durch besonders hohe Steifigkeit im Vergleich zu anderen Getrieben auszeichnet. Mit Hilfe eines verspannten Zykloidgetriebes kann der verhältnismäßig schwere und lange Spindelarm 30 präzise bewegt werden, so dass die Spindel 34 genau positioniert werden kann, obwohl eine der drei Rotationsbewegungen zur Positionierung der Spindel 34 entfernt von der Spindel 34 am entgegengesetzten Ende des Spindelarms 30 und eine zweite Rotationsbewegung in etwa in der Mitte des Spindelarms 30 erfolgt.

Zur Übertragung einer Drehbewegung auf den zweiten Spindelarmabschnitt 32, die unabhängig von der Drehbewegung des ersten Spindelarmabschnitts 31 erfolgt, weist der erste Unterabschnitt 311 des ersten Spindelarmabschnitts 31 einen zweiten verspannten Antrieb 313 auf, der aus vier kreisförmigen Antriebselementen 313A - 313D und einem kreisförmigen Abtriebselement 313E mit größerem, z.B. zweifachem Radius im Vergleich zum Radius der Antriebselemente 313A - 313D besteht. Die Antriebselemente 313A - 313D sind umfänglich am Abtriebselement 313E angeordnet und übertragen gemeinsam ein Drehmoment auf das Abtriebselement 313E. Die Verspannung der Antriebselemente 313A - 313D zur Eliminierung des Umkehrspiels und damit zur genaueren Positionierung der Spindel 34 kann beispielsweise dadurch realisiert sein, dass je zwei der vier Antriebselemente 313A - 313D mittels eines Riemens mechanisch verspannt sind, wobei die Riemen jeweils um die zwei Antriebselemente 313A, 313B bzw. 313C, 313D und um einen dritten Fixpunkt außerhalb der Kreisfläche des Abtriebselements 313E laufen und so zwei Dreiecke bilden. Die Antriebselemente 313A - 313D am ersten Spindelarmabschnitt 31 sind gleichmäßig über dem Umfang des Abtriebselements 213E verteilt. Der zweite verspannte Antrieb 313 am ersten Spindelarmabschnitt 31 kann ebenfalls als Zykloidgetriebe ausgebildet sein.

Zur Übertragung einer Drehbewegung auf den dritten Spindelarmabschnitt 33, die unabhängig von den Drehbewegungen des ersten und zweiten Spindelarmabschnitts 31, 32 erfolgt, weist der zweite Endabschnitt 326 des zweiten Spindelarmabschnitts 32 einen dritten Antrieb 323 auf. Im in Fig. 3A gezeigten Ausführungsbeispiel ist der zweite Endabschnitt 326 des zweiten Spindelarmabschnitts 32 so wie die entsprechenden Endabschnitte 215 und 316 des Spindelarmaufnahmeabschnitts 21 und des ersten Spindelarmabschnitts 31 zweiteilig bzw. gabelförmig ausgebildet, so dass sich in diesem Ausführungsbeispiel der dritte Antrieb 323 zwischen den Unterabschnitten 321, 322 des zweiten Spindelarmabschnitts 32 befindet. Der dritte Antrieb 323 kann als gekühlter Torqueantrieb ausgebildet sein, der sich aufgrund der Kühlung durch thermische Stabilität, eine hohe Dynamik und durch hohe Antriebssteifigkeit auszeichnet.

Die Beweglichkeit des Spindelarms 30 wird nochmals anhand Fig. 3B erläutert. In Fig. 3B ist eine Schnittansicht einer Ausführungsform der erfindungsgemäßen Werkzeugmaschine aus der gleichen Perspektive wie in Fig. 3A gezeigt. Die Rotationsachsen R1, R2, R3 des Spindelarms 30 sind senkrecht zur Papierebene orientiert. Der Spindelarmaufnahmeabschnitt 21 ist auf der Aufnahmefläche 200 des Maschinenständers 20 angeordnet, wobei in Fig. 3B nur einer der beiden räumlich getrennten Unterabschnitte 211, 212 des Spindelarmaufnahmeabschnitts 21 sichtbar ist. An den Spindelarmaufnahmeabschnitt 21 ist der Spindelarm 30 am ersten Endabschnitt 315 des ersten Spindelarmabschnitts 31 angelenkt, so dass der erste Endabschnitt 215 des Spindelarmaufnahmeabschnitts 21 und der erste Endabschnitt 315 des ersten Spindelarmabschnitts 31 ein Scharniergelenk bilden. Aufgrund der Größe der beteiligten Komponenten (also des ersten Endabschnitts 215 des Spindelarmaufnaheabschnitts 21, des ersten Endabschnitts 315 des ersten Spindelarmabschnitts 31 und des großen radförmigen Abtriebselement 213E) kann der Motor des ersten verspannten Antriebs 213 an diesem Gelenk dabei platzsparend in der Hohlwelle des Gelenks untergebracht sein. Am ersten Spindelarmabschnitt 31 befindet sich der Pufferabschnitt 317, der eine Bewegung des zweiten Spindelarmabschnitts 32 um die zweiten Rotationsachse R2 auf den ersten Spindelarm 31 zu stoppt.

Ein ähnlicher Aufbau in etwas kleinerer Form findet sich auch am Gelenk der zweiten Rotationsachse R2. Dort ist der zweite Spindelarmabschnitt 32 mit seinem ersten Endabschnitt 325 am zweiten Endabschnitt 316 des ersten Spindelarmabschnitts 31 angelenkt. Gezeigt ist auch das im Vergleich zum Abtriebselement 213E kleinere Abtriebselement 313E des zweiten verspannten Antriebs 313. Auch hier ist wieder nur einer der beiden Unterabschnitte 311, 312 des zweiten Endabschnitts 316 des ersten Spindelarmabschnitts 31 gezeigt.

Am Gelenk der dritten Rotationsachse R3 befindet sich die Spindel 34 am dritten Spindelarmabschnitt 33, der zwischen den Unterabschnitten 321, 322 des zweiten Endabschnitts 326 des zweiten Spindelarmabschnitts 32 untergebracht ist und um die dritte Rotationsachse R3 rotierbar ist. Das in der Spindel 34 aufgenommene Werkzeug 35 (nicht gezeigt) ist, alleine oder mit dem Spindelkopf, um die Achse R4 rotierbar, um die spanende Bearbeitung auszuführen.

Ebenfalls gezeigt sind der um die Achse R5 drehbare Tisch 50 mit Palette auf dem Schlitten 51, der auf den Führungsschienen der ersten Linearachse 61 verfahrbar gelagert ist.

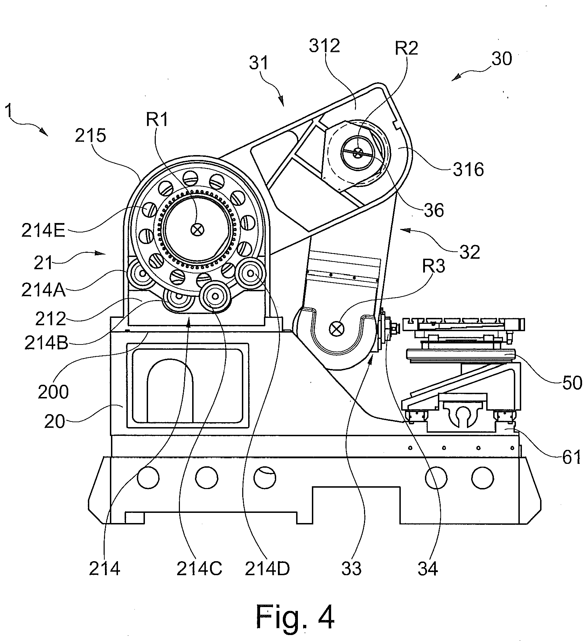

Fig. 4 zeigt den Aufbau eines Ausführungsbeispiels der erfindungsgemäßen Werkzeugmaschine 1 im Vergleich zu Fig. 3A von der gegenüberliegenden Seite. In diesem Ausführungsbeispiel ist die Verteilung der Antriebe an den beiden Seiten der Werkzeugmaschine 1 nicht symmetrisch. Während am zweiten Unterabschnitt 212 des Spindelarmaufnahmeabschnitts 21 genauso wie am ersten Unterabschnitt 211 (siehe Fig. 3A) vier Antriebselemente 214A-D ein Abtriebselement 214E in Rotation versetzen, befinden sich am zweiten Unterabschnitt 312 des ersten Spindelarmabschnitts 31 im Gegensatz zum ersten Unterabschnitt 311 (siehe Fig. 3A) keine Antriebselemente. Die Verteilung der Antriebe hängt von der Größe des Drehmoments ab, das am jeweiligen Gelenk übertragen werden soll und kann bei einem anderen Ausführungsbeispiel der erfindungsgemäßen Werkzeugmaschine 1 symmetrisch oder in einer anderen Weise asymmetrisch sein.

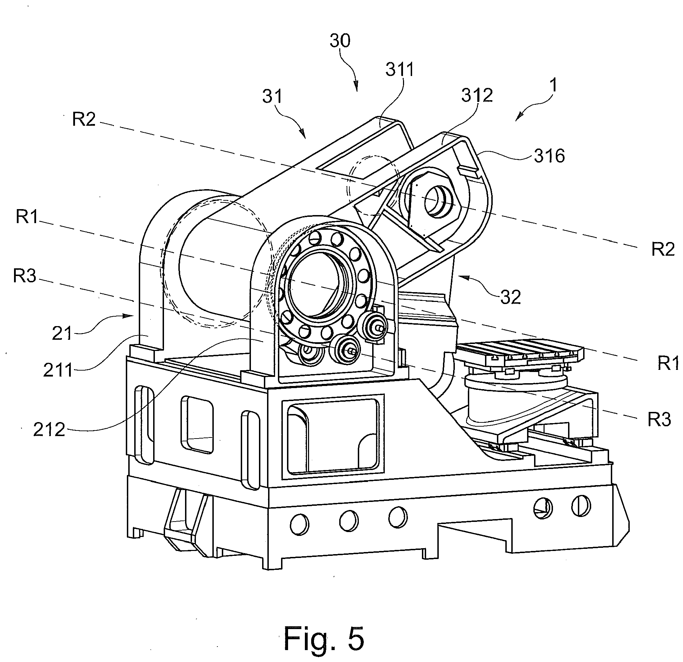

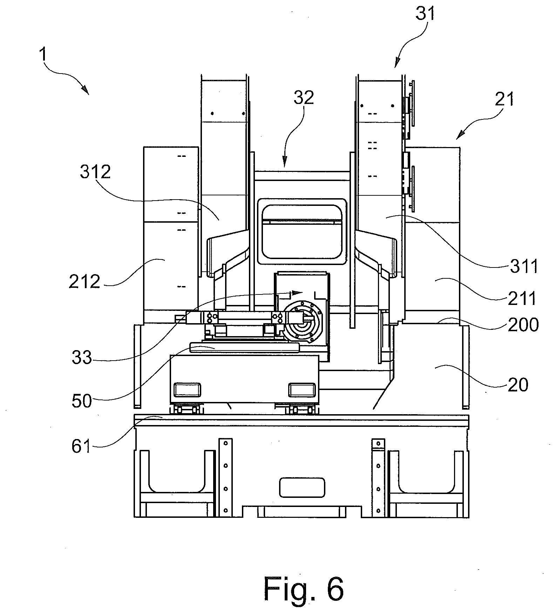

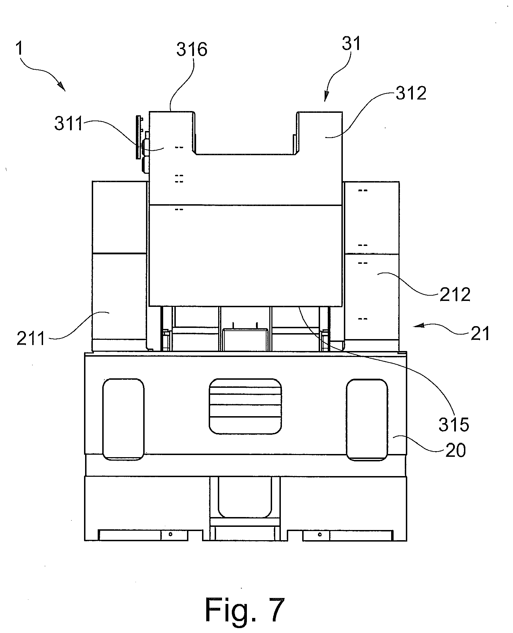

Figs. 5, 6 und 7 zeigen Ausführungsbeispiele der erfindungsgemäßen Werkzeugmaschine 1 aus weiteren Perspektiven (Fig. 5 von schräg hinten, Fig. 6 von vorne, Fig. 7 von hinten), bei denen die Zweiteiligkeit bzw. die Gabelform im Aufbau des Spindelarmaufnahmeabschnitts 21 mit den zwei Unterabschnitten 211, 212 und der Spindelarmabschnitte 31 und 32 mit jeweils zwei Unterabschnitten 311, 312 und 321, 322 an ihren zweiten Endabschnitten 316 und 326 zum Ausdruck kommt.

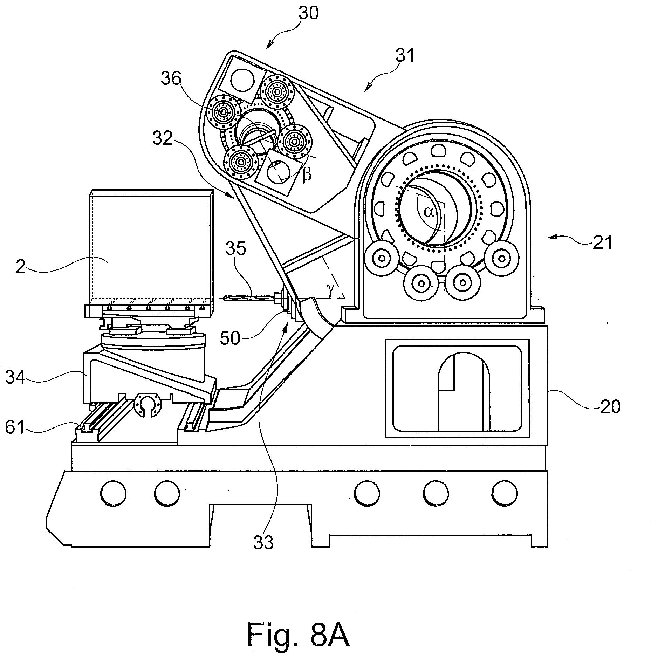

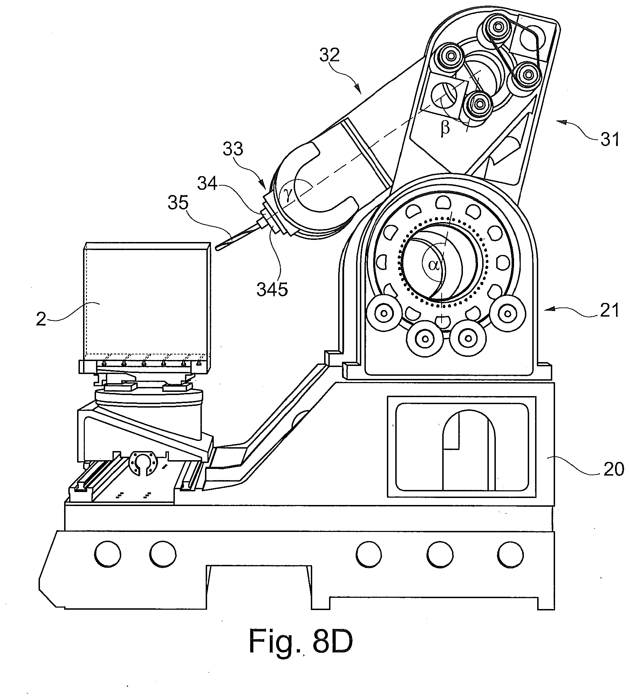

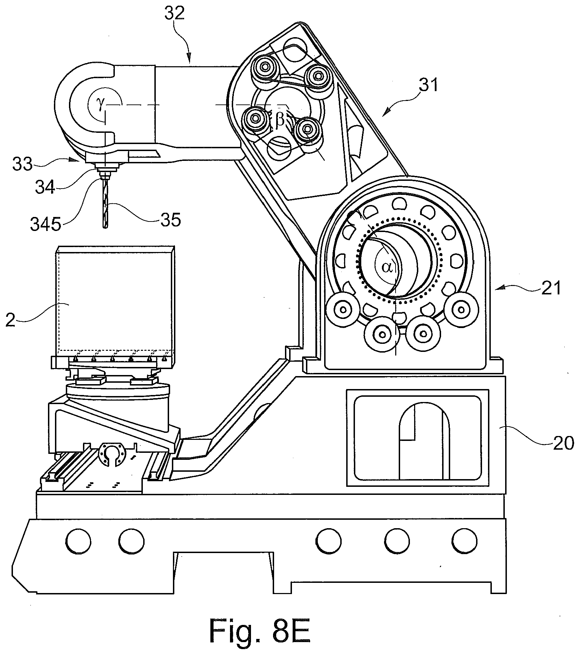

Figs. 8A-E zeigen verschiedene Bearbeitungspositionen des Spindelarms 30 mit einem langen Bohrwerkzeug 35 während einer Rundumbearbeitung eines würfelförmigen Werkstücks 2, wobei das Werkzeug 35 am Spindelarm 30 eine Bahn entlang zweier benachbarter Oberflächen des Würfels abfährt, die nachfolgend als Vorderseite und Oberseite des Werkstücks 2 bezeichnet werden. In Figs. 8A-C ist die Spindel 34 auf die Vorderseite ausgerichtet, Fig. 8D zeigt den Übergang zur Oberseite. In Fig. 8E ist die Spindel 34 auf die Oberseite ausgerichtet.

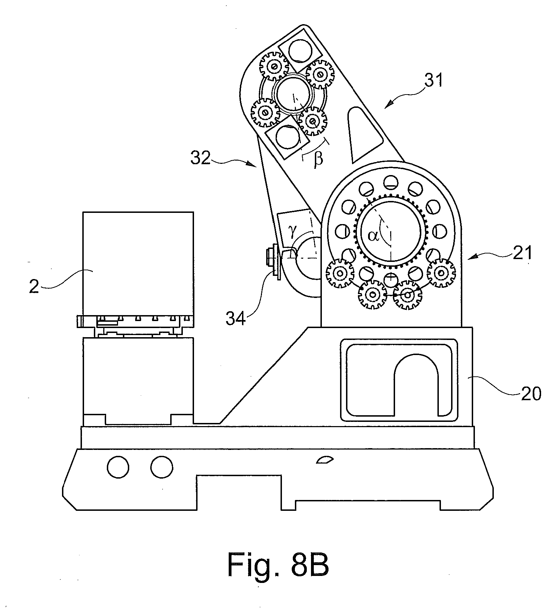

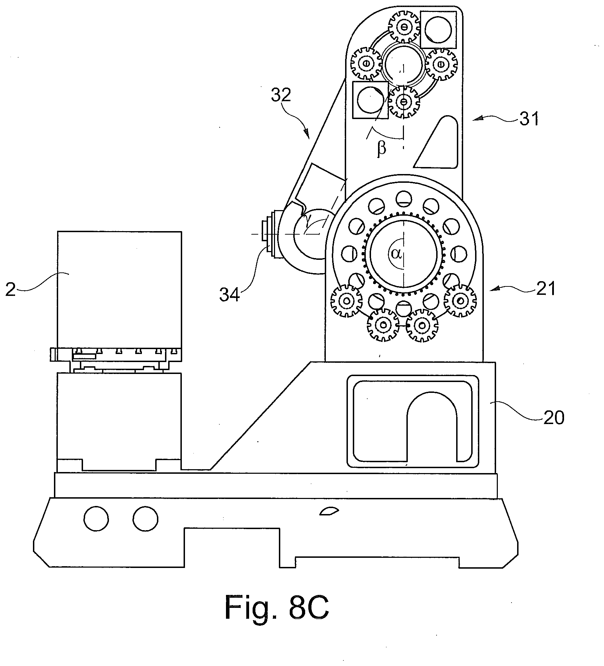

In Fig. 8A ist eine Positionierung der Spindel 34 mit dem Werkzeug 35 auf die untere Kante der Vorderseite des Werkstücks 2 gezeigt, in Fig. 8B eine Positionierung der Spindel 34 (das Werkzeug 35 ist nicht gezeigt) auf den mittleren Bereich der Vorderseite des Werkstücks 2 und in Fig. 8C eine Positionierung der Spindel 34 (das Werkzeug 35 ist nicht gezeigt) auf die obere Kante der Vorderseite des Werkstücks 2. Anhand von Figs. 8A-C ist ersichtlich, dass der Winkel α zwischen dem Spindelarmaufnahmeabschnitt 21 und dem ersten Spindelarmabschnitt 31 bei einer Verfahr- oder Bearbeitungsbewegung der Spindel entlang der Vorderfläche des Werkstücks 2 von unten nach oben größer wird und der Winkel β zwischen ersten Spindelarmabschnitt 31 und zweitem Spindelarmabschnitt 32 keinen größen Veränderungen unterworfen ist. Der Winkel γ zwischen dem zweiten Spindelarmabschnitt 32 und dem dritten Spindelarmabschnitt 33 wird ebenfalls größer. Die Veränderungen der Winkel hängen jedoch von der Größe und der Entfernung des Werkstücks 2 vom Spindelarmaufnahmeabschnitt 21 ab. Zudem ist die Winkelkombination (α; β; γ), mit der eine bestimmte Spindelorientierung erreicht wird, nicht notwendigerweise eindeutig, da dieselbe Orientierung beispielsweise auch bei einem kleineren Winkel β erreicht wird, wenn zugleich ein größerer Winkel α gewählt wird. Aufgrund der komplexen Berechnungen wird deswegen vorzugsweise eine CNC-Steuerung zum Steuern der Verschwenkbewegungen der Spindelarmabschnitte 31, 32, 33 verwendet, die eine geeignete Winkelkombination (α; β; γ) für eine bestimmte Spindelpositionierung ermittelt. Zum Bearbeiten von Werkstücken 2 mit einer größeren Höhe als das in Figs. 8A-C gezeigte Werkstück 2 wird der erste Spindelarmabschnitt 31 noch weiter nach rechts geschwenkt, so dass der Winkel α größer wird als 180°.

Die Möglichkeit, durch Verschwenken des ersten Spindelarmabschnitts 31 einen Winkel α>180° zwischen Spindelarmaufnahmeabschnitt 21 und erstem Spindelarmabschnitt 31 zu bilden, wird jedoch auch schon bei dem in Figs. 8A-E gezeigten Werkstück 2 genutzt, wie in Fig. 8D ersichtlich ist. Dort ist der Übergang der Bewegung des Spindelarms von einer Bearbeitung der Vorderseite zur Bearbeitung der Oberseite gezeigt. Aufgrund des langen Bearbeitungswerkzeugs 35 wird die Werkzeugspitze so von der Werkstückoberseite weit genug entfernt gehalten. Auch in dieser Position ist jedoch eine Bearbeitung, z.B. eines kugelförmigen Werkstücks 2, möglich.

Fig. 8E zeigt eine Spindelposition zum Bearbeiten der Oberseite eines würfelförmigen Werkstücks 2 mit dem langen Werkzeug 35. In dieser Position bilden der zweite Spindelarmabschnitt 32 und die Längsachse des Werkzeugs 35 einen rechten Winkel.

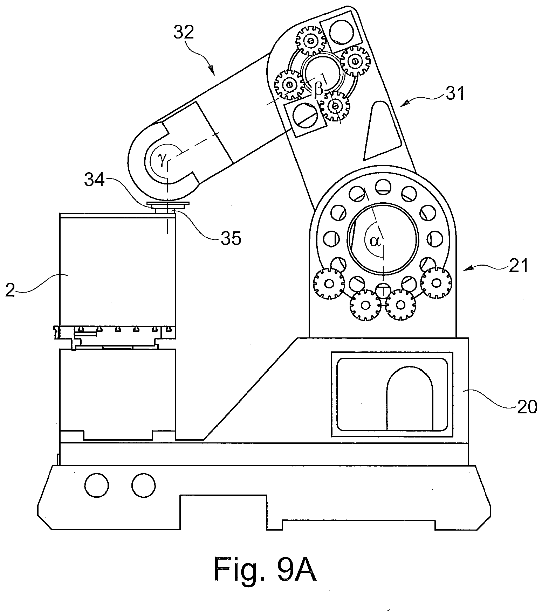

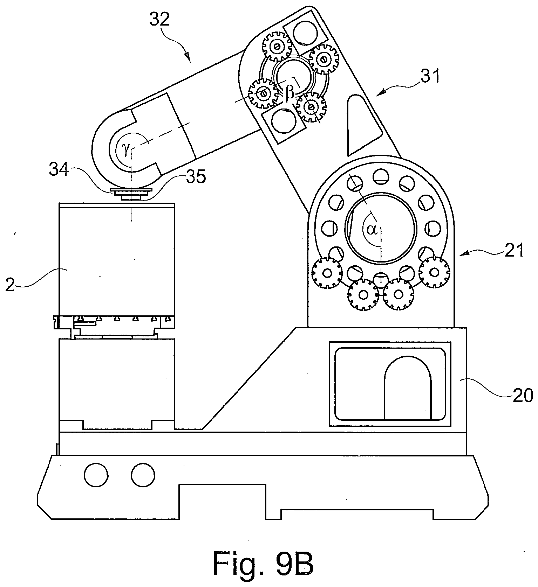

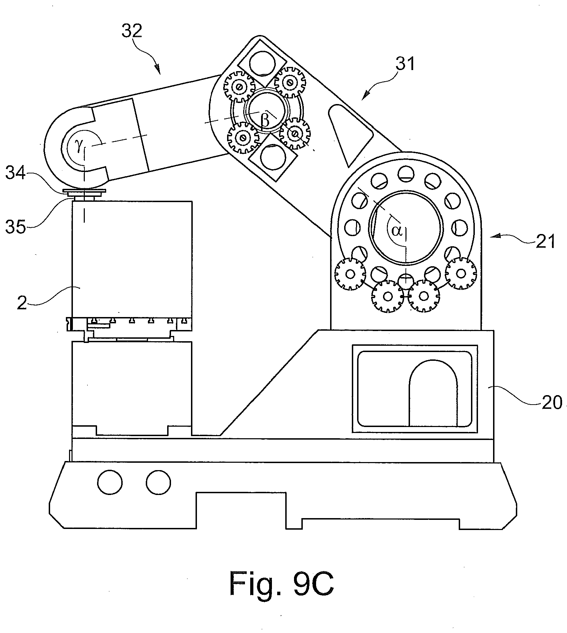

In Figs. 9A-C ist wie in Fig. 8E die Oberseitenbearbeitung eines würfelförmigen Werkstücks 2 gezeigt, allerdings mit einem kurzen Werkzeug 35 an der Spindel 34. Fig. 9A zeigt dabei die Bearbeitung der vorderen Kante der Oberseite des Werkstücks 2, Fig. 9B zeigt die Bearbeitung in einem mittleren Bereich der Oberseite und Fig. 9C zeigt die Bearbeitung der hinteren Kante der Oberseite. Im Vergleich zur Oberseitenbearbeitung mit einem langen Werkzeug ist dabei der Winkel β während der gesamten Verfahrbahn entlang der Oberseite kleiner.

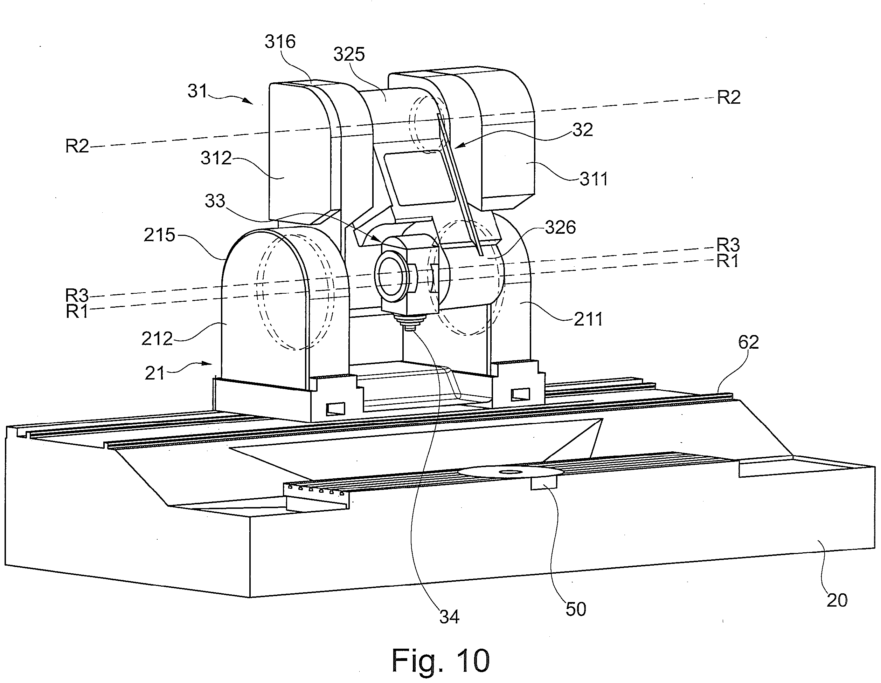

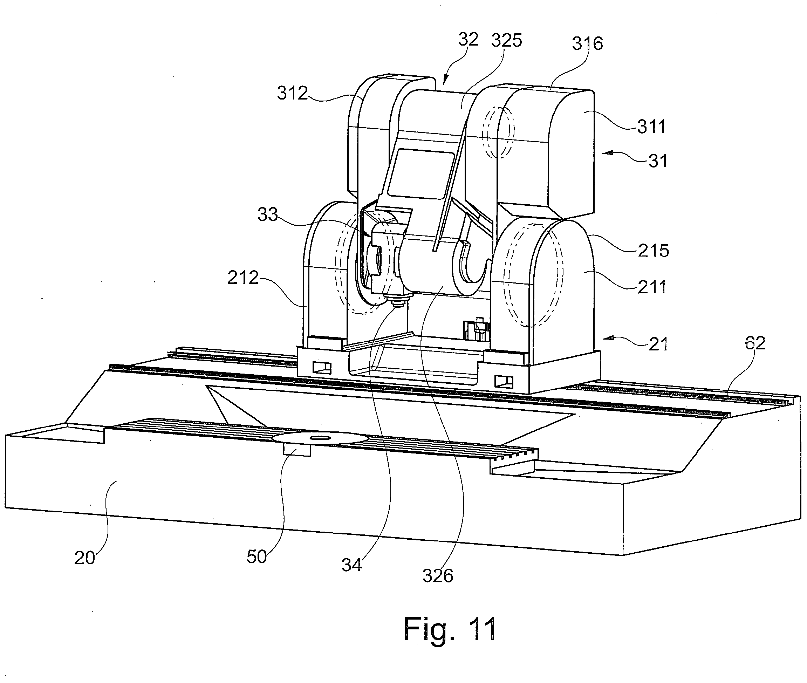

Figs. 10 und 11 zeigen ein weiteres Ausführungsbeispiel einer erfindungsgemäßen Werkzeugmaschine 1 aus zwei verschiedenen Perspektiven von schräg vorne. Im Unterschied zu Figs. 1-9 ist in Figs. 10 und 11 hat der Maschinenständer 20 die Form eines langen Maschinenbetts, wobei der Spindelarmaufnahmeabschnitt 21 mit dem Spindelarm 30 auf zwei Führungsschienen einer zweiten Linearachse 62, die parallel zu den drei Rotationsachsen R1, R2, R3 verläuft, verfahrbar ist.

Außerdem ist der zweite Endabschnitt 326 des zweiten Spindelarmabschnitts 32 nicht zweiteilig bzw. gabelförmig ausgebildet, sondern besteht nur noch aus einem Teil, neben dem der dritte Spindelarmabschnitt 33 mit der Spindel 34 angeordnet ist.

Zudem ist der Drehtisch 50 nicht mehr linear verfahrbar, sondern nur rotierbar in den Maschinenständer 20 eingesetzt.

Die Antriebe für die Rotationsbewegungen sind in diesem Ausführungsbeispiel in der Hohlwelle des Gelenks der ersten Rotationsachse R1 (erster verspannter Antrieb 211), im ersten Unterabschnitt 311 des ersten Spindelarmabschnitts 31 (zweiter verspannter Antrieb 311) und im zweiten Endabschnitt 326 des zweiten Spindelarmabschnitts 32 (dritter Antrieb 321) untergebracht.

Die vorliegende Erfindung ist nicht auf die vorstehend beschriebenen Ausführungsbeispiele beschränkt, sondern vielmehr können die einzelnen Aspekte bzw. einzelnen Merkmale der vorstehend beschriebenen Ausführungsbeispiele kombiniert werden, um weitere Ausführungsbeispiele der vorliegenden Erfindung bereitzustellen.

Insbesondere kann eine erfindungsgemäße Werkzeugmaschine 1 auch beide Linearachsen 61 und 62 umfassen. Weiterhin kann eine erfindungsgemäße Werkzeugmaschine 1 zwei Bearbeitungsstationen umfassen, die sich an gegenüberliegenden Seiten der Werkzeugmaschine 1 befinden, wobei die 360°-Verschwenkbarkeit des zweiten Spindelarmabschnitts 32 ausgenutzt wird, um von einer Bearbeitungsstation zu der anderen zu wechseln. Eine erfindungsgemäße Werkzeugmaschine 1 kann auch aus mehr als drei Spindelarmabschnitten 31, 32, 33 (z.B. aus vier Spindelarmabschnitten) bestehen, von denen jeder einzeln rotierbar ist. Weiterhin ist es möglich das Werkstück 2 an der Spindel 34 aufzunehmen und das Werkzeug 35 auf dem Drehtisch zu montieren.

### LISTE DER BEZUGSZEICHEN

- 1: Werkzeugmaschine
- 2: Werkstück

- 20: Maschinenständer
- 200: Aufnahmefläche

- 21: Spindelarmaufnahmeabschnitt
- 211: erster Unterabschnitt des Spindelarmaufnahmeabschnitts
- 212: zweiter Unterabschnitt des Spindelarmaufnahmeabschnitts
- 213: erster verspannter Antrieb
- 213A **-** 213D: Antriebselemente des ersten verspannten Antriebs
- 213E: Abtriebselement des ersten verspannten Antriebs
- 214: vierter verspannter Antrieb
- 214A - 214D: Antriebselemente des vierten verspannten Antriebs
- 214E: Abtriebselement des vierten verspannten Antriebs
- 215: erster Endabschnitt des Spindelarmaufnahmeabschnitts
- 216: zweiter Endabschnitt des Spindelarmaufnahmeabschnitts

- 30: Spindelarm

- 31: erster Spindelarmabschnitt
- 311: erster Unterabschnitt des ersten Spindelarmabschnitts
- 312: zweiter Unterabschnitt des ersten Spindelarmabschnitts
- 313: zweiter verspannter Antrieb
- 313A - 313D: Antriebselemente des zweiten verspannten Antriebs
- 313E: Abtriebselement des zweiten verspannten Antriebs
- 315: erster Endabschnitt des ersten Spindelarmabschnitts
- 316: zweiter Endabschnitt des ersten Spindelarmabschnitts
- 317: Pufferabschnitt

- 32: zweiter Spindelarmabschnitt
- 321: erster Unterabschnitt des zweiten Spindelarmabschnitts
- 322: zweiter Unterabschnitt des zweiten Spindelarmabschnitts
- 323: dritter Antrieb
- 325: erster Endabschnitt des zweiten Spindelarmabschnitts
- 326: zweiter Endabschnitt des zweiten Spindelarmabschnitts

- 33: dritter Spindelarmabschnitt
- 34: Spindel
- 345: Endabschnitt der Spindel
- 35: Werkzeug
- 36: Führungselement
- 361: Mantel
- 362: Steg
- 363: Segment
- 40: numerische Steuerung
- 50: Drehtisch
- 51: Schlitten
- 61: erste Linearachse
- 62: zweite Linearachse
- 70: Leitung

- R1: erste Rotationsachse
- R2: zweite Rotationsachse
- R3: dritte Rotationsachse
- R4: Spindelrotationsachse
- R5: Drehtischrotationsachse

## Patentansprüche

1. Werkzeugmaschine (1) zur spanenden Bearbeitung eines Werkstücks (2), mit
einem Spindelarm (30) mit einer Spindel (34) zur Aufnahme eines spanend bearbeitenden Werkzeugs (35) oder des spanend zu bearbeitenden Werkstücks (2), wobei der Spindelarm (30) zum Positionieren der Spindel (34) in einem Bearbeitungsraum bewegbar an einem Spindelarmaufnahmeabschnitt (21) angebracht ist, der an einem Maschinenständer (20) angeordnet ist;
wobei der Spindelarm (30) zum Verschwenken der Spindel (34) umfasst:
einen als Längselement ausgebildeten und gegenüber dem Spindelarmaufnahmeabschnitt (21) um eine erste Rotationsachse (R1) drehbaren ersten Spindelarmabschnitt (31), der am Spindelarmaufnahmeabschnitt (21) angelenkt ist, wobei sich die erste Rotationsachse (R1) in einem ersten Endabschnitt (215) des Spindelarmaufnahmeabschnitts (21) und in einem ersten Endabschnitt (315) des ersten Spindelarmabschnitts (31) befindet;
einen als Längselement ausgebildeten und gegenüber dem ersten Spindelarmabschnitt (31) um eine zweite Rotationsachse (R2) drehbaren zweiten Spindelarmabschnitt (32), der am ersten Spindelarmabschnitt (31) angelenkt ist, wobei sich die zweite Rotationsachse (R2) in einem zweiten Endabschnitt (316) des ersten Spindelarmabschnitts (31) und in einem ersten Endabschnitt (325) des zweiten Spindelarmabschnitts (32) befindet;
wobei der Spindelarmaufnahmeabschnitt (21) einen ersten Unterabschnitt (211) und einen zweiten Unterabschnitt (212) umfasst, die zur Aufnahme des Spindelarms (30) voneinander beabstandet an dem Maschinenständer (20) angeordnet sind, und der erste Spindelarmabschnitt (31) des Spindelarms (30) zwischen dem ersten Unterabschnitt (211) und dem zweiten Unterabschnitt (212) des Spindelarmaufnahmeabschnitts (21) angeordnet ist;
und wobei der erste Unterabschnitt (211) des Spindelarmaufnahmeabschnitts (21) einen ersten Antrieb (213) zur Übertragung eines ersten Drehmoments auf den ersten Spindelarmabschnitt (31) für eine Rotationsbewegung des ersten Spindelarmabschnitts (31) um die erste Rotationsachse (R1) aufweist, und
der erste Spindelarmabschnitt (31) einen zweiten Antrieb (313) zur Übertragung eines zweiten Drehmoments auf den zweiten Spindelarmabschnitt (32) für eine Rotationsbewegung des zweiten Spindelarmabschnitts (32) um die zweite Rotationsachse (R2) umfasst;
**dadurch gekennzeichnet, dass**
der erste Spindelarmabschnitt (31) einen ersten Unterabschnitt (311) und einen zweiten Unterabschnitt (312) umfasst, die zur Aufnahme des zweiten Spindelarmabschnitts (32) voneinander beabstandet angeordnet sind, wobei der zweite Spindelarmabschnitt (32) zwischen dem ersten Unterabschnitt (311) und dem zweiten Unterabschnitt (312) des ersten Spindelarmabschnitts (31) angeordnet ist; und
der erste Antrieb (213) und der zweite Antrieb (313) als verspannte Antriebe ausgeführt sind, wobei der zweite Antrieb (313) am ersten Unterabschnitt (311) des ersten Spindelarmabschnitts (31) angeordnet ist.

2. Werkzeugmaschine (1) nach Anspruch 1, wobei
der Spindelarm (30) einen gegenüber dem zweiten Spindelarmabschnitt (32) um eine dritte Rotationsachse (R3) drehbaren dritten Spindelarmabschnitt (33) zur Aufnahme der Spindel (34) umfasst, der am zweiten Spindelarmabschnitt (32) angelenkt ist, wobei sich die dritte Rotationsachse (R3) in einem zweiten Endabschnitt (326) des zweiten Spindelarmabschnitts (32) befindet; und
der zweite Spindelarmabschnitt (32) einen ersten Unterabschnitt (321) und einen zweiten Unterabschnitt (322) umfasst, die zur Aufnahme des dritten Spindelarmabschnitts (33) voneinander beabstandet angeordnet sind, wobei der dritte Spindelarmabschnitt (33) zwischen dem ersten Unterabschnitt (321) und dem zweiten Unterabschnitt (322) des zweiten Spindelarmabschnitts (32) angeordnet ist.

3. Werkzeugmaschine (1) nach Anspruch 2, wobei
der zweite Spindelarmabschnitt (32) einen dritten Antrieb (323) zur Übertragung eines dritten Drehmoments auf den dritten Spindelarmabschnitt (33) für eine Rotationsbewegung des dritten Spindelarmabschnitts (33) um die dritte Rotationsachse (R3) aufweist.

4. Werkzeugmaschine (1) nach Anspruch 3, wobei
die erste Rotationsachse (R1), die zweite Rotationsachse (R2) und die dritte Rotationsachse (R3) parallel zueinander orientiert sind; und
die Werkzeugmaschine (1) weiter umfasst:
eine numerische Steuerung (40), die dazu ausgelegt ist, den ersten verspannten Antrieb (213) am Spindelarmaufnahmeabschnitt (21), den zweiten verspannten Antrieb (313) am ersten Spindelarmabschnitt (31) und den dritten Antrieb (323) am zweiten Spindelarmabschnitt (32) so zu steuern, dass durch gleichzeitige Rotationsbewegungen des ersten Spindelarmabschnitts (31) um die erste Rotationsachse (R1), des zweiten Spindelarmabschnitts (32) um die zweite Rotationsachse (R2) und des dritten Spindelarmabschnitts (33) um die dritte Rotationsachse (R3) ein Endabschnitt (345) der Spindel (34) am dritten Spindelarmabschnitt (33) eine rechtwinklige Bahn in einer Ebene senkrecht zu den parallelen Rotationsachsen (R1, R2, R3) ausführt.

5. Werkzeugmaschine (1) nach einem der Ansprüche 3 bis 4, wobei
die am Spindelarmaufnahmeabschnitt (21) und am ersten Spindelarmabschnitt (31) angeordneten verspannten Antriebe (213, 313) als Zykloidgetriebe ausgebildet sind; und
der am zweiten Spindelarmabschnitt (32) angeordnete dritte Antrieb (323) als gekühlter Torqueantrieb ausgebildet ist.

6. Werkzeugmaschine (1) nach einem der vorangehenden Ansprüche, wobei
ein Abstand zwischen den zwei Unterabschnitten (211, 212) des Spindelarmaufnahmeabschnitts (21) größer ist als ein Abstand zwischen den zwei Unterabschnitten (311, 312) des ersten Spindelarmabschnitts (31).

7. Werkzeugmaschine (1) nach einem der vorangehenden Ansprüche, wobei
der Spindelarm (30) ein Führungselement (36) zur Leitungsführung an einer Position, an der der zweite Spindelarmabschnitt (32) am ersten Spindelarmabschnitt (31) angelenkt ist, umfasst, wobei das Führungselement (36) mehrere Segmente (363) zur getrennten Führung mehrerer Leitungen (70) aufweist.

8. Werkzeugmaschine (1) nach einem der vorangehenden Ansprüche, weiter umfassend
einen um eine Drehtischrotationachse (R5) rotierbaren Drehtisch (50) am Maschinenständer (20) zur Aufnahme des Werkstücks (2) oder des Werkzeugs (35).

9. Werkzeugmaschine (1) nach Anspruch 8, weiter umfassend
eine erste Linearachse (61) zur Aufnahme des Drehtischs (50), wobei der Drehtisch (50) entlang der ersten Linearachse (61) bewegbar und die Drehtischrotationsachse (R5) in einem Winkel zwischen 0 Grad und 90 Grad zur ersten Linearachse (61) orientiert ist.

10. Werkzeugmaschine (1) nach einem der vorangehenden Ansprüche, weiter umfassend
eine zweite Linearachse (62) zur Aufnahme des Spindelarmaufnahmeabschnitts (21), wobei die zweite Linearachse (62) parallel zur ersten Rotationsachse (R1) orientiert ist und der Spindelarmaufnahmeabschnitt (21) entlang der zweiten Linearachse (62) am Maschinenständer (20) bewegbar angeordnet ist.

11. Werkzeugmaschine (1) nach einem der vorangehenden Ansprüche, wobei
der Maschinenständer (20) eine Aufnahmefläche (200) zur Aufnahme des Spindelarmaufnahmeabschnitts (21) aufweist;
durch eine Richtung von einer Deckenfläche eines Aufstellraumes für die Werkzeugmaschine (1) zu einer Standfläche der Werkzeugmaschine (1) eine Oben-Unten-Richtung definiert ist; und
der Spindelarmaufnahmeabschnitt (21) an der Aufnahmefläche (200) entweder oberhalb der Aufnahmefläche (200) oder unterhalb der Aufnahmefläche (200) oder seitlich der Aufnahmefläche (200) angeordnet ist.

## Claims

1. A machine tool (1) for machining a workpiece (2), comprising
a spindle arm (30) with a spindle (34) for receiving a machining tool (35) or said workpiece (2) to be machined, said spindle arm (30) for positioning said spindle (34) being attached to a spindle arm receiving section (21) arranged on a machine column (20) so as to be moveable in a machining space;
wherein said spindle arm (30) for pivoting said spindle (34) comprises:
a first spindle arm section (31) which is configured as a longitudinal element, rotatable with respect to said spindle arm receiving section (21) about a first axis of rotation (R1) and hinged to said spindle arm receiving section (21), wherein said first axis of rotation (R1) is located in a first end section (215) of said spindle arm receiving section (21) and in a said first end section (315) of said first spindle arm section (31);
a second spindle arm section (32) which is configured as a longitudinal element, rotatable with respect said first spindle arm section (31) about a second axis of rotation (R2) and hinged to said first spindle arm section (31), wherein said second axis of rotation (R2) is located in a second end section (316) of said first spindle arm section (31) and in a first end section (325) of said second spindle arm section (32);
wherein said spindle arm receiving section (21) comprises a first subsection (211) and a second subsection (212), which are arranged at a distance from one another on said machine column (20) to receive said spindle arm (30), and said first spindle arm section (31) of said spindle arm (30) is arranged between said first subsection (211) and said second subsection (212) of said spindle arm receiving section (21);
and wherein said first subsection (211) of said spindle arm receiving section (21) comprises a first drive (213) for transmitting a first torque to said first spindle arm section (31) for a rotational movement of said first spindle arm section (31) about said first axis of rotation (R1), and
said first spindle arm section (31) comprises a second drive (313) for transmitting a second torque to said second spindle arm section (32) for a rotational movement of said second spindle arm section (32) about said second axis of rotation (R2);
**characterized in that**
said first spindle arm section (31) comprises a first subsection (311) and a second subsection (312), which are arranged at a distance from one another to receive said second spindle arm section (32), said second spindle arm section (32) being arranged between said first subsection (311) and said second subsection (312) of said first spindle arm section (31); and
said first drive (213) and said second drive (313) are configured as braced drives, said second drive (313) being arranged on said first subsection (311) of said first spindle arm section (31).

2. The machine tool (1) according to claim 1, wherein
said spindle arm (30) comprises a third spindle arm section (33) for receiving said spindle (34) which is rotatable with respect to said second spindle arm section (32) about a third axis of rotation (R3) and hinged to said second spindle arm section (32), said third axis of rotation (R3) being located in a second end section (326) of said second spindle arm section (32); and
said second spindle arm section (32) comprises a first subsection (321) and a second subsection (322) which are arranged at a distance to receive said third spindle arm section (33), said third spindle arm section (33) being arranged between said first subsection (321) and said second subsection (322) of said second spindle arm section (32).

3. The machine tool (1) according to claim 2, wherein
said second spindle arm section (32) comprises a third drive (323) for transmitting a third torque to said third spindle arm section (33) for a rotational movement of said third spindle arm section (33) about said third axis of rotation (R3).

4. The machine tool (1) according to claim 3, wherein
said first axis of rotation (R1), said second axis of rotation (R2) and said third axis of rotation (R3) are oriented parallel to one another; and
said machine tool (1) further comprises: a numerical control (40) configured to control said first braced drive (213) on said spindle arm receiving section (21), said second braced drive (313) on said first spindle arm section (31) and said third braced drive (323) on said second spindle arm section (32) in such a way that an end section (345) of said spindle (34) on said third spindle arm section (33) performs a rectangular path in a plane perpendicular to the parallel axes of rotation (R1, R2, R3) as a result of simultaneous rotational movements of said first spindle arm section (31) about said first axis of rotation (R1), said second spindle arm section (32) about said second axis of rotation (R2) and said third spindle arm section (33) about said third axis of rotation (R3).

5. The machine tool (1) according to one of claims 3 to 4, wherein
said braced drives (213, 313) arranged on said spindle arm receiving section (21) and on said first spindle arm section (31) are configured as cycloid gears; and
said third drive (323) arranged on said second spindle arm section (32) is configured as a cooled torque drive.

6. The machine tool (1) according to one of the preceding claims, wherein
a distance between the two subsections (211, 212) of said spindle arm receiving section (21) is greater than a distance between the two subsections (311, 312) of said first spindle arm section (31).

7. The machine tool (1) according to one of the preceding claims, wherein
said spindle arm (30) comprises a guiding element (36) for running lines at a position at which said second spindle arm section (32) is hinged to said first spindle arm section (31), wherein said guiding element (36) has a plurality of segments (363) for separately guiding a plurality of lines (70).

8. The machine tool (1) according to one of the preceding claims, further comprising
a rotary table (50) at said machine column (20), which is rotatable about a rotary table axis of rotation (R5) and serves to receive said workpiece (2) or said tool (35).

9. The machine tool (1) according to claim 8, further comprising
a first linear axis (61) for receiving said rotary table (50), wherein said rotary table (50) is movable along said first linear axis (61) and said rotary table axis of rotation (R5) is oriented at an angle between 0 degrees and 90 degrees with respect to said first linear axis (61).

10. The machine tool (1) according to one of the preceding claims, further comprising
a second linear axis (62) for receiving said spindle arm receiving section (21), wherein said second linear axis (62) is oriented parallel to said first axis of rotation (R1) and said spindle arm receiving section (21) is arranged on said machine column (20) so as to be movable along said second linear axis (62).

11. The machine tool (1) according to one of the preceding claims, wherein
said machine column (20) has a receiving surface (200) for receiving said spindle arm receiving section (21);
an up-down direction is defined by a direction from a ceiling surface of an installation room for said machine tool (1) to a stand surface of said machine tool (1); and
said spindle arm receiving section (21) is arranged on said receiving surface (200) either above said receiving surface (200) or below said receiving surface (200) or on a side of said receiving surface (200).

## Revendications

1. Machine-outil (1) pour l'usinage par enlèvement de copeaux d'une pièce (2), comprenant
un bras de broche (30) avec une broche (34) pour la réception d'un outil (35) d'usinage par enlèvement de copeaux ou de la pièce (2) à usiner par enlèvement de copeaux, dans laquelle le bras de broche (30) pour le positionnement de la broche (34) est monté sur une partie de réception de bras de broche (21), qui est disposée sur un bâti de machine (20), de manière à pouvoir se déplacer dans un espace d'usinage ;
dans laquelle le bras de broche (30) comprend pour le pivotement de la broche (34) :
une première partie de bras de broche (31) réalisée sous la forme d'un élément longitudinal et pouvant tourner autour d'un premier axe de rotation (R1) par rapport à la partie de réception de bras de broche (21), qui est articulée sur la partie de réception de bras de broche (21), dans laquelle le premier axe de rotation (R1) se trouve dans une première partie d'extrémité (215) de la partie de réception de bras de broche (21) et dans une première partie d'extrémité (315) de la première partie de bras de broche (31) ;
une deuxième partie de bras de broche (32) réalisée sous la forme d'un élément longitudinal et pouvant tourner autour d'un deuxième axe de rotation (R2) par rapport à la première partie de bras de broche (31), qui est articulée sur la première partie de bras de broche (31), dans laquelle le deuxième axe de rotation (R2) se trouve dans une deuxième partie d'extrémité (316) de la première partie de bras de broche (31) et dans une première partie d'extrémité (325) de la deuxième partie de bras de broche (32) ;
dans laquelle la partie de réception de bras de broche (21) comprend une première sous-partie (211) et une deuxième sous-partie (212), qui sont disposées sur le bâti de machine (20) à distance l'une de l'autre pour la réception du bras de broche (30), et la première partie de bras de broche (31) du bras de broche (30) est disposée entre la première sous-partie (211) et la deuxième sous-partie (212) de la partie de réception de bras de broche (21) ;
et dans laquelle la première sous-partie (211) de la partie de réception de bras de broche (21) présente un premier entraînement (213) pour la transmission d'un premier couple sur la première partie de bras de broche (31) pour un mouvement de rotation de la première partie de bras de broche (31) autour du premier axe de rotation (R1), et
la première partie de bras de broche (31) comprend un deuxième entraînement (313) pour la transmission d'un deuxième couple sur la deuxième partie de bras de broche (32) pour un mouvement de rotation de la deuxième partie de bras de broche (32) autour du deuxième axe de rotation (R2) ;
**caractérisée en ce que**
la première partie de bras de broche (31) comprend une première sous-partie (311) et une deuxième sous-partie (312), qui sont disposées à distance l'une de l'autre pour la réception de la deuxième partie de bras de broche (32), dans laquelle la deuxième partie de bras de broche (32) est disposée entre la première sous-partie (311) et la deuxième sous-partie (312) de la première partie de bras de broche (31) ; et
le premier entraînement (213) et le deuxième entraînement (313) sont conçus sous la forme d'entraînements serrés, dans laquelle le deuxième entraînement (313) est disposé sur la première sous-partie (311) de la première partie de bras de broche (31).

2. Machine-outil (1) selon la revendication 1, dans laquelle le bras de broche (30) comprend une troisième partie de bras de broche (33) pour la réception de la broche (34) pouvant tourner autour d'un troisième axe de rotation (R3) par rapport à la deuxième partie de bras de broche (32), qui est articulée sur la deuxième partie de bras de broche (32), dans laquelle le troisième axe de rotation (R3) se trouve dans une deuxième partie d'extrémité (326) de la deuxième partie de bras de broche (32) ; et
la deuxième partie de bras de broche (32) comprend une première sous-partie (321) et une deuxième sous-partie (322), qui sont disposées à distance l'une de l'autre pour la réception de la troisième partie de bras de broche (33), dans laquelle la troisième partie de bras de broche (33) est disposée entre la première sous-partie (321) et la deuxième sous-partie (322) de la deuxième partie de bras de broche (32).

3. Machine-outil (1) selon la revendication 2, dans laquelle
la deuxième partie de bras de broche (32) présente un troisième entraînement (323) pour la transmission d'un troisième couple sur la troisième partie de bras de broche (33) pour un mouvement de rotation de la troisième partie de bras de broche (33) autour du troisième axe de rotation (R3).

4. Machine-outil (1) selon la revendication 3, dans laquelle
le premier axe de rotation (R1), le deuxième axe de rotation (R2) et le troisième axe de rotation (R3) sont orientés parallèlement les uns aux autres ; et
la machine-outil (1) comprend en outre :
une commande numérique (40), qui est conçue pour commander le premier entraînement (213) serré sur la partie de réception de bras de broche (21), le deuxième entraînement (313) serré sur la première partie de bras de broche (31) et le troisième entraînement (323) sur la deuxième partie de bras de broche (32), de sorte que par des mouvements de rotation simultanés de la première partie de bras de broche (31) autour du premier axe de rotation (R1), de la deuxième partie de bras de broche (32) autour du deuxième axe de rotation (R2) et de la troisième partie de bras de broche (33) autour du troisième axe de rotation (R3) une partie d'extrémité (345) de la broche (34) sur la troisième partie de bras de broche (33) exécute une trajectoire à angle droit dans un plan perpendiculairement aux axes de rotation (R1, R2, R3) parallèles.

5. Machine-outil (1) selon l'une quelconque des revendications 3 à 4, dans laquelle
les entraînements (213, 313) serrés disposés sur la partie de réception de bras de broche (21) et sur la première partie de bras de broche (31) sont réalisés sous la forme de transmission cycloïdes ; et
le troisième entraînement (323) disposé sur la deuxième partie de bras de broche (32) est réalisé sous la forme d'un entraînement de couple refroidi.

6. Machine-outil (1) selon l'une quelconque des revendications précédentes, dans laquelle
une distance entre les deux sous-parties (211, 212) de la partie de réception de bras de broche (21) est supérieure à une distance entre les deux sous-parties (311, 312) de la première partie de bras de broche (31).

7. Machine-outil (1) selon l'une quelconque des revendications précédentes, dans laquelle
le bras de broche (30) comprend un élément de guidage (36) pour le guidage de ligne dans une position dans laquelle la deuxième partie de bras de broche (32) est articulée sur la première partie de bras de broche (31), dans laquelle l'élément de guidage (36) présente plusieurs segments (363) pour le guidage séparé de plusieurs lignes (70).

8. Machine-outil (1) selon l'une quelconque des revendications précédentes, comprenant en outre
une table tournante (50) pouvant tourner autour d'un axe de rotation de table tournante (R5) sur le bâti de machine (20) pour la réception de la pièce (2) ou de l'outil (35).

9. Machine-outil (1) selon la revendication 8, comprenant en outre
un premier axe linéaire (61) pour la réception de la table tournante (50), dans laquelle la table tournante (50) peut se déplacer le long du premier axe linéaire (61) et l'axe de rotation de table tournante (R5) est orienté à un angle compris entre 0 degré et 90 degrés par rapport au premier axe linéaire (61).

10. Machine-outil (1) selon l'une quelconque des revendications précédentes, comprenant en outre
un deuxième axe linéaire (62) pour la réception de la partie de réception de bras de broche (21), dans laquelle le deuxième axe linéaire (62) est orienté parallèlement au premier axe de rotation (R1) et la partie de réception de bras de broche (21) est disposée de manière à pouvoir se déplacer le long du deuxième axe linéaire (62) sur le bâti de machine (20).

11. Machine-outil (1) selon l'une quelconque des revendications précédentes, dans laquelle
le bâti de machine (20) présente une surface de réception (200) pour la réception de la partie de réception de bras de broche (21) ;
une direction haut-bas est définie par une direction à partir d'une surface de plafond d'un espace d'installation pour la machine-outil (1) vers une surface de pose de la machine-outil (1) ; et
la partie de réception de bras de broche (21) est disposée sur la surface de réception (200) soit au-dessus de la surface de réception (200) soit au-dessous de la surface de réception (200) ou à côté de la surface de réception (200).
